# EUROPÄISCHE PATENTSCHRIFT

(11) **EP 0 501 355 B1**
(45) Veröffentlichungstag und Bekanntmachung des Hinweises auf die Patenterteilung: **04.05.1994**
(21) Anmeldenummer: 92103012.8
(22) Anmeldetag: 21.02.1992
(51) Int. Cl.: C02F 3/28, B01J 8/20

(54) **Verfahren zur anaeroben Wasserbehandlung, insbesondere zur mikrobiellen Nitrateliminierung aus Trinkwasser**
Anaerobic water treatment process, in particular for the microbial elimination of nitrate from drinking water
Processus de traitement anaérobie de l'eau, notamment de l'élimination par micro-organismes du nitrate de l'eau potable

(30) Priorität: 25.02.1991 DE 4105855
(43) Veröffentlichungstag der Anmeldung: 02.09.1992
(73) Patentinhaber: Böhler, Ernst, Dr., D-01159 Dresden (DE); Haldenwang, Lutz, Dr., D-01445 Radebeul (DE)
(72) Erfinder: Böhler, Ernst, Dr., D-01159 Dresden (DE); Haldenwang, Lutz, Dr., D-01445 Radebeul (DE)
(74) Vertreter: Hofmann, Klaus, Dipl.-Ing. Patentanwalt

(56) Entgegenhaltungen:
- EP-A- 0 428 747
- DD-A- 256 122
- DE-A- 3 229 436
- BIOTECHNOLOGY AND BIOENGINEERING, SYMPOSIUM Nr. 11, Mai 1981, NEW YORK USSeiten 415 - 427; J.F.WALKER,JR. ET AL.: 'BIOLOGICAL TREATMENT OF NITRATEWASTEWATER USING FLUIDIZED-BED BIOREACTORS'
- WORLD PATENTS INDEX Week 7829, Derwent Publications Ltd., London, GB; AN 78-52155A

## Beschreibung

Die Erfindung betrifft die anaerobe Wasserbehandlung in körniges Trägermaterial enthaltenden Wirbelschichtreaktoren, insbesondere zur mikrobiellen Nitrateliminierung aus Trinkwasser.

Bekannt ist der Einsatz von Wirbelschichtreaktoren, womit hohe Biomassekonzentrationen und Raumleistungen erreicht werden. Es wurde zunächst Sand, aber auch Aktivkohle oder Blähton eingesetzt und die Wirbelschicht durch das mit entsprechender Geschwindigkeit aufwärts strömende Wasser erzeugt. Derartige Reaktoren besitzen einen Verteilerboden, eine Wirbelschicht mit darüber befindlichem Freiraum zum Schutz vor Trägermaterialaustrag und ein Abzugssystem für das behandelte Wasser. Eine Kreislaufführung eines Teilstromes zur Erzeugung des Wirbelbettes bei Wässern, die auf Grund ihrer Belastung und der Geschwindigkeit der Abbauvorgänge längere Abbauzeiten erfordern, wird bei Bedarf vorgesehen.
Zu stark bewachsene Trägerpartikel werden in seitlich angeordneten Taschen oberhalb der Wirbelschicht abgetrennt, gereinigt und wieder in den Reaktor zurückgeführt. Eine andere bekannte Möglichkeit ist der Einsatz von Rührwerken im oberen Teil der Wirbelschicht. Durch die Scherkräfte wird überschüssige Biomasse von den Trägerteilchen abgetrennt und mit dem Wasserstrom aus dem Reaktor entfernt.
Bei den zur Wasserbehandlung verwendeten Wirbelschichtreaktoren mit einem Durchsatz größerer Wasserströme und Reaktorhöhen bis etwa 6m handelt es sich um ideale Mischkessel mit einem breiten Verweilzeitspektrum.

Eine Umkehrung des Prinzips stellen Wirbelschichtreaktoren mit schwimmfähigen, körnigen Trägermaterialien dar, wie z.B. in US 4 256 573 und DE 2 841 011 beschrieben, bei denen durch den Abwärtsstrom des Wassers ein Wirbelbett erzeugt wird.
Gemäß DD 256 122 wird das Wirbelbett des anaeroben Teiles eines kombinierten Reaktors mit schwimmfähigen Trägermaterialien durch eine 10- bis 20-fache Kreislaufführung erzwungen. Mit diesem Reaktor werden recht hohe Raumleistungen um 300 gNO₃⁻/m³Reaktorvolumen x h erreicht. Nachteilig sind die hohe Trübung, hervorgerufen durch das Zerschlagen der Biomasseflocken infolge der Kreislaufführung und hohe Nitritwerte im Ablauf.

In einem vertikalen Rohrreaktor mit gesintertem Schaumpolystyren als Trägermaterial nach DD 267 026 werden auf Grund des günstigen Schlankheitsgrades eine Zonierung und ein schon recht enges Verweilzeitspektrum erreicht. Der Ablauf endet in einer Fangvorrichtung für zu dick bewachsenes und damit aus dem Reaktor ausgetragenes Trägermaterial. Der vertikale Rohrreaktor wird in Anlagen zur Nitratentfernung aus Trinkwasser eingesetzt. Bei einer Oberflächenbelastung von etwa 85 m/h (m³Wasser/m²Grundfläche x h) war z.B. zum Nitratabbau von 90 auf 25 mg/l eine Reaktorhöhe von 21 m bei Rohwasserbedingungen von pH-Wert 6,2 bis 6,4 sowie Sauerstoffgehalt von 6 bis 8 mg/l und gesintertem Schaumpolystyren als Trägermaterial erforderlich. Das Trägermaterial besaß die Körnung 2 bis 6 mm, eine Kornrohdichte von etwa 0,48 g/cm³ und eine Kornnaßdichte von etwa 0,75 g/cm³. Die Korndichte von Trägerteilchen, die mit einem mehr oder weniger dicken Biofilm bewachsen sind, steigt weiter in Richtung der Dichte des Wassers an.
Ein Nachteil dieses vertikalen Rohrreaktors ist die große Bauhöhe, die je nach abzubauender Nitratkonzentration sogar 20 bis 25 m und mehr erreichen muß. Derartig hohe Reaktoren lassen sich aus architektonischen Gründen oder den Bedingungen des Untergrundes nicht an jeden Standort errichten. Ein weiterer damit verbundener Nachteil ist der hohe Energiebedarf für die Förderung des zu behandelnden Wassers, wenn der Reaktor sich in Geländehöhe befindet, und andererseits die hohen Kosten für die Herstellung, wenn der Reaktor sich unterhalb der Geländeoberfläche befindet.

Der Erfindung liegt das Problem zugrunde, mittels eines geeigneten Verfahrens für die anaerobe Wasserbehandlung die Vorteile der vertikalen Rohrreaktoren bei engem Verweilzeitspektrum mit einer geringen Bauhöhe der Gesamtanlage und niedrigen Kosten zu vereinen. Die einzelnen Teilschritte bei der Denitrifikation sollen ungestört einzeln und nacheinander ablaufen.

Erfindungsgemäß wird die erforderliche gesamte Höhe eines Rohrreaktors auf mehrere, in Reihe geschaltete, niedrigere Reaktoren aufgeteilt, die nacheinander vom zu behandelnden Wasserstrom durchflossen werden. Zu dick bewachsene Trägerteilchen werden von der ersten Reaktorstufe in die nachfolgende(n) Stufe(n) bis in die nachgeschaltete Trenneinheit transportiert, dort rückgehalten und gereinigt und in die erste Reaktorstufe zurückgefördert.

Entgegen Vorbehalten und Befürchtungen wurde in Versuchen gefunden, daß mit dieser Kaskadenschaltung in allen einzelnen Reaktorstufen ein annähernd gleicher Anteil an Trägermaterial und damit Raumleistung erhalten werden konnte. Die Nachteile eines hohen technologischen Aufwandes üblicher Reihenschaltungen, die in diesem Falle die Anordnung eines 1. Reaktors mit 1. Trenneinheit und Rückförderung in den 1. Reaktor, dann 2. Reaktor mit 2. Trenneinheit und Rückförderung in den 2. Reaktor usw. vorgesehen hätten, wurden mit der Erfindung vermieden.

Ein weiterer Vorteil des erfindungsgemäßen Verfahrens ist, daß im Gegensatz zur Leitung des zu behandelnden Wassers über einen einzigen idealen Mischkessel durch das gerichtete Strömen des Wassers von einer Reaktorstufe in die nächste ein noch günstigeres Verweilzeitspektrum, erreicht wird, Rückvermischungen vermieden werden und die einzelnen Teilschritte bei der Denitrifikation ungestört nacheinander ablaufen können, das heißt, daß in der ersten Reaktorstufe der im Rohwasser befindliche Sauerstoff und teilweise Nitrat abgebaut wird und in den folgenden Reaktoren die Nitratumsetzung zu Stickstoff unter streng anaeroben Bedingungen ablaufen kann. In den einzelnen Reaktoren bildet sich jeweils eine optimale Mischpopulation aus. Die Anzahl der Reaktoren wird in der Regel drei nicht überschreiten.

Durch die Biomasseproduktion und damit einer Umhüllung der Trägerpartikel nähert sich die Dichte der bewachsenen Teilchen dem Wert 1,0 g/cm³. Die Trägerteilchen werden hydraulisch von einem Reaktor in den folgenden Reaktor und schließlich in die nachgeschaltete Trenneinheit gefördert. Durch eine Reinigung und Rückförderung mittels Ejektor in den ersten Reaktor stellt sich ein dynamisches Gleichgewicht zwischen Zufuhr und Austrag von Trägermaterial in allen Reaktoren ein.

Aus der Trenneinheit wird bewachsenes Trägermaterial durch den Ejektor abgezogen, die Biomasse durch die Scherbeanspruchungen vom Trägermaterial getrennt und gereinigtes Trägermaterial mit dem Schlammwasser in den Zulauf des ersten Reaktors zurückgefördert. Bei Bedarf kann ein Teil des Schlammwassers in einem Separator abgeschlagen werden. Das gereinigte Trägermaterial schichtet sich entsprechend seiner Dichte in das Wirbelbett ein.

Falls alle Reaktoren oben geschlossen sind, erfolgt eine Druckunterbrechung erst im Ablauf. Die Abführung des entstehenden Biogases, z.B. Stickstoff, erfolgt mittels einer Entlüftung entweder kontinuierlich oder periodisch. Unmittelbar unter dem Deckel bildet sich dadurch ein Gasraum aus. Durch die Betriebsweise der Reaktoren als geschlossenes System wird die Bauhöhe minimal und alle Reaktoren können die gleiche Bauhöhe besitzen.

Bei Verwendung von Trägermaterial welches einen geringen Druckverlust Δp in der Wirbelschicht hervorruft, zum Beispiel gesintertes Schaumpolystyren nach DD 261 921 mit einem Druckverlust Δp von nur 0,1 m pro m Höhe, können die einzelnen Reaktoren wegen der nur wenig unterschiedlichen Bauhöhen höhengestaffelt angeordnet sein und eine Druckunterbrechung kann in jeder Reaktorstufe vorgenommen werden. Trotzdem sind die Reaktoren mit einem lose aufgelegten Dekkel mit geöffneter Entlüftung versehen, um einen Eintrag von störendem Luftsauerstoff zu verhindern.

Im Gegensatz dazu müßten bei der erstgenannten Variante mit geschlossenen Reaktorstufen wasserdichte Deckel verwendet werden, die für optische Kontrollen einen höheren manuellen Aufwand erfordern. Die verfahrenstechnischen Unterschiede zwischen beiden Varianten sind minimal.

Zur Beschleunigung der Einarbeitung beim Anfahren der Anlage und zur Anpassung an wechselnde Betriebsverhältnisse ist die Kreislaufförderung eines Teilstromes möglich.

Die Erfindung soll nachfolgend an zwei Ausführungsbeispielen und der zugehörigen Zeichnungen erläutert werden.
Es zeigen:
- Fig. 1 -: Wirbelschichtreaktor; Kaskade mit Trägermaterial einer Dichte über 1,0 g/cm³
- Fig. 2 -: Wirbelschichtreaktor; Kaskade mit schwimmendem Trägermaterial und höhengestaffelter Anordnung

Trotz felsigem Untergrund sollen die Vorteile eines biologischen Verfahrens zur Nitrateliminierung mittels Wirbelschichtraktoren hohen Schlankheitsgrades genutzt werden.

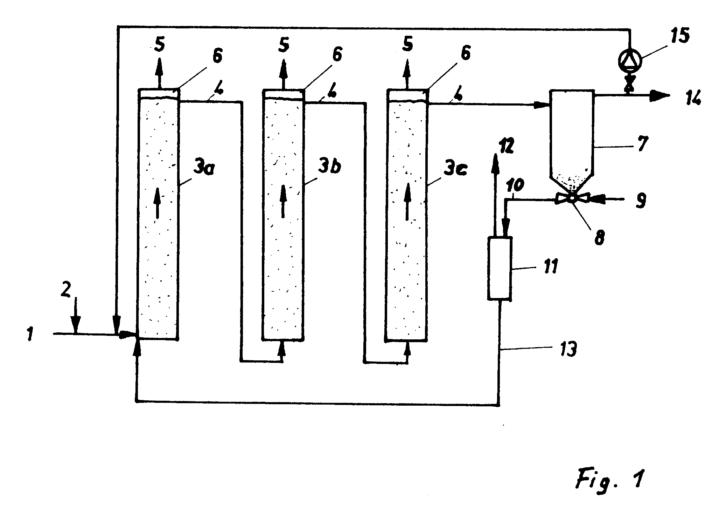

Zur Eliminierung von Nitrat aus belastetem Rohwasser 1 durchströmt in Figur 1 das zu behandelnde und mit Chemikalien 2 versetzte Rohwasser 1 nacheinander die einzelnen Reaktorstufen 3a bis 3c über einen Reaktorauslauf 4 und gelangt schließlich einschließlich zu stark bewachsenem und damit aus der Reaktorkaskade ausgetragenem Trägermaterial in eine Trenneinheit 7. Das Trägermaterial sammelt sich in der Trichterspitze der Trenneinheit 7, wird mittels Ejektor 8 gereinigt und als Gemisch Trägermaterial/Schlammwasser 10 in den Zulaufbereich der ersten Reaktorstufe 3a zurückgefördert.
Ein Teil des Schlammwassers 12 wird über einen Separator 11 mittels Treibwasser 9 aus dem System abgeleitet. Aus dem Separator 11 wird das gereinigte Trägermaterial über eine Leitung 13 in die erste Reaktorstufe 3a rückgeführt. Das behandelte Wasser 14 wird zur Nachbehandlung gefördert. Zur Beschleunigung der Einarbeitung und Anpassung an wechselnde Betriebsverhältnisse, z.B. durch wechselnde Verweilzeit, wird ein Teilstrom 15 im Kreislauf gefahren. In die erste Reaktorstufe 3a erfolgt eine Nährstoffdosierung in Form einer Ethanol- oder Phosphatzugabe.
Das entstandene Gas sammelt sich im Gassammelraum 6 am oberen, mit einem Deckel versehenem Ende der einzelnen Reaktorstufen 3a bis 3c und wird über die Gasableitung 5 abgeleitet.
Als Trägermaterial wird Aktivkohle, Blähton oder Sand verwendet. Die Füllmenge an Trägermaterial beträgt etwa 50 % des jeweiligen Reaktorvolumens.

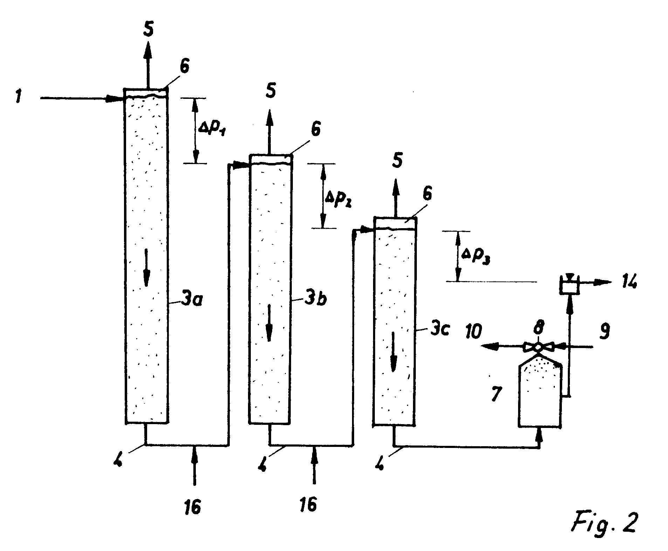

Ein weiteres Beispiel zeigt in Fig. 2 eine Reaktorkaskade unter Verwendung von Trägermaterial mit einer Dichte < 1 g/cm³. Das verwendete gesinterte Schaumpolystyren mit einem Druckverlust Δp von nur 0,1 m/m Reaktorhöhe gestattet es, die Reaktoren auch höhengestaffelt anzuordnen, da die Differenzen der Bauhöhen zwischen den einzelnen Reaktorstufen gering gehalten werden können.
Für einen Nitratabbau von 90 auf 25 mg/l und einer Oberflächenbelastung von 85 m/h wäre eine gesamte Reaktorhöhe von 21 m erforderlich. Diese kann bei höhengestaffelter Anordnung von drei in Reihe geschalteten Reaktorstufen wie folgt gestaltet werden:
- 1. Stufe 3a:: Gesamthöhe 8,0 m
Zulauf bei +7,9 m (bezogen auf Reaktorboden)
- 2. Stufe 3b:: Gesamthöhe 7,0 m
Zulauf bei +6,9 m (einschließlich Rohrreibung der Verbindungsleitungen)
- 3. Stube 3c:: Gesamthöhe 6,0 m
Zulauf bei +5,9 m
Ablauf 14 bei 5,0 m (einschließlich Rohrreibung von Auslauf 4 über Trenneinheit 7 bis Ablauf 14)

Die Druckverluste in den 3 Reaktorstufen allein betragen etwa Δp₁= 0,8 m, Δp₂= 0,7 m und Δp₃=0,6 m. Nach der ersten Reaktorstufe erfolgt eine zusätzliche sekundärdosierung 16 in Form von Spurenstoffen, wie z.B. Fe²⁺-Ionen, um eine Nitritbildung zu behindern.

Mit dem erfindungsgemäßen Verfahren gelingt es, die Vorteile eines rohrförmigen Bioreaktors mit hohem Schlankheitsgrad, das heißt einer Ausbildung verschiedener Zonen des biologischen Abbaus über die Höhe des Reaktors und eines weitgehend ungestörten biologischen Gleichgewichtes aufgrund der gleichmäßigen Durchströmung und kontinuierlichen Regenerierung des Aufwuchsträgermaterials, aufrecht zu erhalten, während die Bauhöhe der Gesamtanlage den örtlichen Bedingungen wie natürlicher Untergrund und Landschaftsbild angepaßt werden kann. Im Falle der mikrobiellen Nitrateliminierung erfolgt in der ersten Reaktorstufe 3a im wesentlichen der Sauerstoffabbau, in der zweiten und dritten Reaktorstufe 3b und 3c im wesentlichen der Nitratabbau und in der dritten Reaktorstufe 3c der Abbau des als Zwischenprodukt gebildeten Nitrits, ohne daß sich die biologischen Vorgänge in den einzelnen Reaktorstufen 3a bis 3c negativ beeinflussen können.

## Patentansprüche

1. Verfahren zur anaeroben Wasserbehandlung, insbesondere zur mikrobiellen Nitrateliminierung aus Trinkwasser, in körniges Trägermaterial enthaltenden Wirbelschichtreaktoren mit Schlankheitsgraden von Höhe : Durchmesser zwischen 5 : 1 und 20 : 1, dadurch gekennzeichnet, daß
- das zu behandelnde Rohwasser (1) nacheinander über mindestens zwei in Reihe geschaltete Wirbelschichtreaktoren (3) geleitet wird,
- im Betriebszustand mit Biomasse bewachsenes Trägermaterial jeweils von einer Reaktorstufe in die nachfolgende Reaktorstufe transportiert wird
- und dieses Trägermaterial mit dem aus dem letzten Reaktor abgehenden Wasserstrom in eine Trenneinheit (7) gelangt,
- aus der das abgetrennte Trägermaterial in die erste Reaktorstufe (3a) rückgeführt wird.

2. Verfahren nach Anspruch 1, dadurch gekennzeichnet, daß das zu behandelnde Rohwasser (1) entsprechend des Druckverlustes Δp in den einzelnen Reaktoren über höhengestaffelte Reaktoren geleitet wird.

3. Verfahren nach Anspruch 1, dadurch gekennzeichnet, daß die einzelnen Wirbelschichtreaktoren ohne Druckunterbrechung betrieben werden.

4. Verfahren nach den Ansprüchen 1 und 3, dadurch gekennzeichnet, daß
das in den einzelnen geschlossenen Reaktoren entstehende Gas aus dem oberen Gassammelraum (6) kontinuierlich oder periodisch abgezogen wird.

5. Verfahren nach den Ansprüchen 1 bis 4, dadurch gekennzeichnet, daß
die erforderlichen Nährstoffe, wie z.B. Ethanol oder Phosphat, in den Zulauf der ersten Reaktorstufe (3a) und bei Bedarf Spurenstoffe, wie z.B. Fe²⁺-Ionen, gestaffelt in die Zuläufe der einzelnen Reaktorstufen (3a bis 3c) dosiert werden.

6. Verfahren nach den Ansprüchen 1 bis 5, dadurch gekennzeichnet, daß
ein Teilstrom aus dem Ablauf in den Zulauf des ersten Reaktors rückgefördert wird.

## Claims

1. Anaerobic water treatment process, in particular for the microbial elimination of nitrate from drinking water, in fluidized-bed reactors having a height/diameter slenderness ratio between 5 : 1 and 20 : 1 and containing granular supporting material, in which process
- the raw water to be treated (1) is passed successively over at least two fluidized-bed reactors (3) in a row;
- supporting material grown over with biomass is conveyed, during, operation from one reactor stage to the subsequent reactor stage;
- this supporting material is passed together with the water discharged from the last reactor stage to a separator (7)
- from which the separated supporting material is fed back to the first reactor stage (3a)

2. Process as claimed in claim 1 in which the raw water to be treated (1) is passed over reactors at different heights in dependence of the pressure loss, Δp, in the individual reactors.

3. Process as claimed in claim 1 in which the individual fluidized-bed reactors are operated without any pressure interruption.

4. Process as claimed in claim 1 and 3 in which the gas produced in the individual enclosed reactors is continuously or regularly withdrawn from the gas collection space (6).

5. Process as claimed in claims 1 to 4 in which the required nutrients, e.g. ethanol or phosphate, are metered and added to the inflow to the first reactor stage (3a) and in which , if necessary, tracers such as Fe²⁺ are metered and gradually added to the inflows to the individual reactor stages (3a to 3c).

6. Process as claimed in claims 1 to 5 in which part of the outflow is fed back to the inflow to the first reactor.

## Revendications

1. Processus de traitement anaérobie de l'eau, notamment de l'élimination par micro-organismes du nitrate de l'eau potable dans des réacteurs à lit fluidisé contenant un véhicule granuleux et ayant des degrés d'allongement d'une hauteur/d'un diamètre compris entre 5:1 et 20:1. Le processus se caractérise par le fait que:
- l'eau brute (1) devant être traitée est conduite consécutivement au moins à travers deux réacteurs à lit fluidisé (3) connectés en série,
- le véhicule revêtu de biomasse en régime de fonctionnement est successivement transporté d'un échelon de réacteur à un échelon de réacteur suivant
- ce véhicule aboutit, avec le courant d'eau sortant du dernier réacteur, à une unité de séparation (7),
- de laquelle le véhicule séparé est reflué au premier échelon du réacteur (3a).

2. Processus conforme à la spécification 1 mais caractérisé par le fait que l'eau brute (1) devant être traitée est conduite, conformément à la perte de pression p, aux différents réacteurs par l'intermédiaire de réacteurs étagés.

3. Processus conforme à la spécification 1 mais caractérisé par le fait que les différents réacteurs à lit fluidisé fonctionnent sans interruption de pression.

4. Processus conforme aux spécifications 1 et 3 mais caractérisé par le fait que
- le gaz se formant dans les réacteurs fermés est continuellement ou périodiquement extrait du collecteur de gaz supérieur (6).

5. Processus conforme aux spécifications 1 à 4 mais caractérisé par le fait que
- les substances nutritives nécessaires telles que, par ex., l'éthanol et le phosphate, sont dosées à l'entrée du premier échelon du réacteur (3a) et que, en cas de besoin, des oligoéléments comme par ex. les ions Fe²⁺ sont dosés graduellement aux entrées des différents échelons des réacteurs (3a à 3c).

6. Processus conforme aux spécifications 1 à 5 mais caractérisé par le fait que
- un courant partiel est reflué de la sortie vers l'entrée du premier réacteur.
